# FASCICULE DE BREVET EUROPEEN

(11) **EP 0 975 509 B1**
(45) Date de publication et mention de la délivrance du brevet: **13.11.2002**
(21) Numéro de dépôt: 98922859.8
(22) Date de dépôt: 24.04.1998
(51) Int. Cl.: B62K 25/28, B62K 25/30

(54) **SUSPENSION ARRIERE POUR BICYCLETTE**
HINTERRADAUFHÄNGUNG FÜR FAHRRAD
BICYCLE REAR SUSPENSION

(30) Priorité: 25.04.1997 FR 9705128
(43) Date de publication de la demande: 02.02.2000
(73) Titulaire: RENAULT SPORT, 91170 Viry-Chatillon (FR)
(72) Inventeur: TRIBOTTE, Pascal, F-75013 Paris (FR)
(74) Mandataire: Srour, Elie
(86) Numéro de dépôt international: FR9800821
(87) Numéro de publication internationale: WO98049046

(56) Documents cités:
- EP-A- 0 493 773
- WO-A-93/13974
- US-A- 3 931 990
- US-A- 5 217 241
- US-A- 5 409 249

## Description

La présente invention concerne une suspension arrière pour bicyclette, notamment destinée à la pratique du tout-terrain.

Les roues arrières de ce type de bicyclette sont généralement reliées au cadre de la bicyclette par des moyens d'amortissement tant à l'arrière qu'à l'avant afin de réduire l'intensité des efforts et des vibrations transmises au cycliste ce qui lui procure un confort amélioré ainsi qu'un meilleur contrôle de sa bicyclette.

Le document US-3.931.990 décrit une bicyclette à suspension oscillante de la roue arrière, reliée à un ressort et à un amortisseur. Avec une telle suspension, seule une fraction de la puissance délivrée par le cycliste à chaque coup de pédale est utilisée pour le déplacement en avant de la bicyclette, la fraction complémentaire étant perdue en compression de la suspension arrière résultant du transfert de masse.

L'invention concerne plus particulièrement une suspension arrière pour bicyclette, du type comprenant une fourche inférieure montée à pivotement au niveau de la boîte de pédalier d'un cadre de bicyclette, et par son autre extrémité à une fourche supérieure, qui porte une roue entraînée en rotation par une chaîne, et dont l'extrémité supérieure est montée à pivotement à l'extrémité d'un bras dont l'autre extrémité est montée à pivotement sur le cadre.

Ainsi, en positionnant de manière telle que décrite les points de pivotement des fourches inférieure et supérieure et du bras, l'écrasement de la suspension résultant du transfert de masse lors du pédalage est non seulement neutralisé mais encore surcompensé, ce qui procure entre autres avantages de conserver tout son potentiel d'amortissement à la suspension.

A cet effet, la suspension selon l'invention est caractérisée en ce que les sommets du quadrilatère articulé délimité par les fourches inférieure et supérieure, le bras et le cadre sont agencés de sorte que la droite passant par l'axe de rotation du moyeu de la roue arrière, d'une part, et le centre de courbure de la trajectoire dudit moyeu lors du débattement de la suspension, d'autre part, forme avec une droite horizontale s'étendant parallèlement au plan longitudinal médian de la bicyclette, un angle compris entre 10° et 20°.

Selon une autre caractéristique de la présente invention, la droite passant par l'axe de rotation du moyeu de la roue arrière, d'une part, et le centre de courbure de la trajectoire dudit moyeu lors du débattement de la suspension, d'autre part, forme avec une droite horizontale s'étendant parallèlement au plan longitudinal médian de la bicyclette, un angle sensiblement égal à 14°.

Selon une autre caractéristique de la présente invention, le centre de courbure de la trajectoire du moyeu de la roue arrière est situé à proximité du plan horizontal contenant la partie supérieure de la chaîne d'entraînement de la roue.

Selon une autre caractéristique de la présente invention, le bras est d'un seul tenant avec un levier de commande d'un ensemble d'absorption de chocs.

Selon une autre caractéristique de la présente invention, le bras et le levier s'étendent dans des directions faisant entre elles un angle obtus.

Selon une autre caractéristique de la présente invention, un ensemble d'absorption de chocs vient s'interposer entre le tube de selle et l'extrémité du levier opposée au point de pivotement.

Selon une autre caractéristique de la présente invention, le point de pivotement de la fourche inférieure sur le cadre est situé au-dessus de l'axe de la boîte de pédalier.

Selon une autre caractéristique de la présente invention, le point de pivotement de la fourche inférieure sur le cadre est situé en avant de l'axe de la boîte de pédalier.

Selon une autre caractéristique de la présente invention, le point de pivotement de la fourche inférieure sur le cadre est disposé au-dessus d'une droite horizontale passant par les axes de rotation des roues avant et arrière.

Selon une autre caractéristique de la présente invention, le point de liaison de la fourche inférieure et de la fourche supérieure est situé au-dessus d'une droite horizontale passant par l'axe de la boîte de pédalier.

Selon une autre caractéristique de la présente invention, le point de liaison de la fourche supérieure et du bras est disposé en avant du point et au-dessus de ce dernier.

Selon une autre caractéristique de la présente invention, le point de pivotement, commun au levier et au bras, sur le cadre est situé en arrière du point.

On comprendra mieux les buts, aspects et caractéristiques de la présente invention, d'après la description donnée ci-après d'un mode de réalisation de l'invention, présenté à titre d'exemple non limitatif, en se référant aux dessins annexés, dans lesquels :

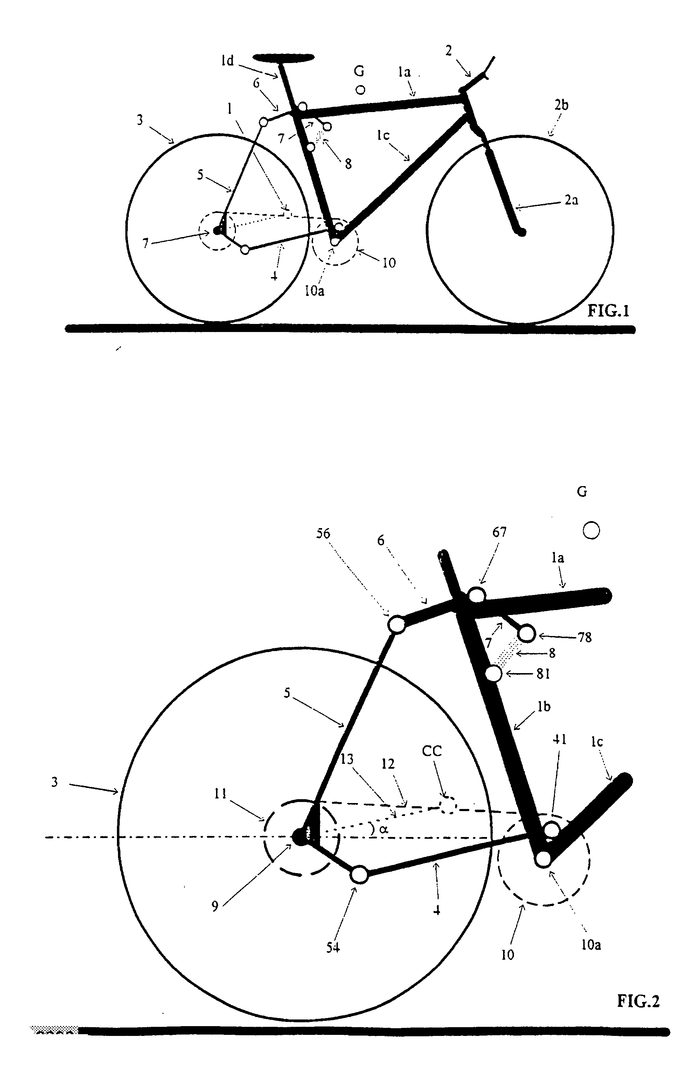

- La figure 1 est une vue en élévation latérale d'une bicyclette équipée d'une suspension selon la présente invention.
- la figure 2 est une vue de détail de la figure 1.

Une forme de réalisation préférée de l'invention est décrite ci-après en référence aux dessins dans lesquels la référence 1 désigne un cadre de bicyclette et la référence 3 désigne la roue arrière de la bicyclette.

Le cadre 1 comprend un tube de selle 1b, un tube supérieur horizontal et un tube en diagonale 1c ; ces trois éléments sont rigidement reliés entre eux, de manière connue, pour former une structure triangulaire.

Le tube de selle 1b, dans lequel coulisse la selle 1d, et le tube en diagonale 1c sont reliés par une boîte de pédalier d'axe 10a ; un tube de direction, qui supporte une fourche avant directrice portant une roue avant 2b, relie le tube supérieur 1a horizontal et le tube en diagonale 1c ; le tube de selle 1b et le tube supérieur en diagonale sont reliés par un raccord de selle.

La roue arrière 3 est reliée au cadre 1 par une structure articulée définissant un quadrilatère avec le tube de selle 1b. Ce quadrilatère articulé, contenu dans un plan sensiblement parallèle au plan médian vertical longitudinal de la bicyclette, comporte les points de pivotement 41, 54, 56, 67 et les côtés 6, 5, 4, 1b.

La partie mobile du quadrilatère comporte une fourche supérieure 5, une fourche inférieure 4 et un bras 6.

La fourche supérieure est jointe à pivotement, par l'une de ses extrémités, à l'une des extrémités du bras 6, et est jointe d'une seule pièce, par son autre extrémité, à un support d'axe de roue arrière.

La fourche inférieure 4 est jointe à pivotement respectivement à la boîte de pédalier par son extrémité avant et à la fourche supérieure 5.

La fourche supérieure 5, d'un seul tenant, comporte deux branches fixées à un support commun 9 d'axe de roue arrière 3, à partir duquel elles s'étendent respectivement vers le haut et vers le bas selon des directions faisant entre elles un angle supérieur à 90° ; une entretoise de rigidification relie les deux branches de la fourche 5.

Les axes de pivotement des différents éléments constitutifs du quadrilatère s'étendent transversalement à la bicyclette.

Le support 9 d'axe de roue arrière reçoit la roue arrière dont on a représenté une seule des roues dentées 11.

La boîte de pédalier reçoit le pédalier dont seul un des plateaux 10 a été représenté.

La roue arrière 3 est entraînée par l'intermédiaire d'une chaîne d'entraînement 12, dont seule la partie supérieure utile a été représentée, passant autour de la roue dentée 11 de la roue arrière et autour du plateau d'entraînement 10.

Un ensemble 14 d'absorption des chocs, constitué par exemple d'un élément élastomère, est joint à pivotement, par ses extrémités respectivement à un levier 7 et au cadre 1. La dureté de l'élastomère est choisie en fonction des besoins, mais cet élément élastomère peut aussi être précontraint, et ce, par exemple par une molette se vissant sur une tige support de l'élastomère. L'élastomère est de préférence emboîté sur la tige entre deux coupelles de retenue.

L'ensemble d'absorption des chocs peut aussi être constitué par un classique combiné ressort-amortisseur.

Préférentiellement, l'ensemble d'absorption des chocs est précontraint de sorte que la suspension soit réglée en butée haute lorsque la bicyclette est immobile et le cycliste en position assise.

Le levier 7 est solidarisé au bras 6, ces deux éléments étant montés à pivotement sur le cadre 1 autour d'un axe commun passant par le point 67.

Dans la suite de la description d'un mode préférentiel de réalisation de l'invention, le positionnement vertical de points particuliers de la bicyclette sera précisé en supposant que la bicyclette repose sur ses roues sur un sol horizontal ; quant au positionnement longitudinal de ces points, il est à considérer selon un axe orienté dans le sens de déplacement normal de la bicyclette.

Le point 41 de pivotement de la fourche inférieure sur le cadre de la bicyclette est disposé au-dessus d'une droite horizontale passant par les axes de rotation des roues avant et arrière et/ou au-dessus d'une droite horizontale passant par l'axe de la boîte de pédalier ; le point 41 est en outre disposé en avant de l'axe 10a de la boîte de pédalier.

Le point 54 de liaison de la fourche inférieure et de la fourche supérieure est situé au-dessus d'une droite horizontale passant par l'axe de la boîte de pédalier.

Le point 56 de liaison de la fourche supérieure et du bras 6 est disposé en avant du point 54 et au-dessus de ce dernier.

Le point de pivotement 67, commun au levier 7 et au bras 6, sur le cadre de bicyclette est situé en arrière du point 41.

Un tel quadrilatère définit un centre de courbure (CC) de la trajectoire du moyeu, situé à proximité de la chaîne d'entraînement, ce qui présente notamment l'avantage de limiter la variation de longueur de la partie utile de la chaîne 1 lors du débattement de la suspension.

La droite 13 passant par le centre de courbure (CC) du moyeu de la roue arrière 3, d'une part, et l'axe dudit moyeu, d'autre part, s'étend dans une direction faisant un angle aigu avec l'horizontale, compris entre 10° et 20° ; de préférence, cet angle, mesuré dans le sens direct, est sensiblement égal à 14°.

Lorsque la bicyclette est équipée de plusieurs roues dentées arrières et de plusieurs plateaux, la position du centre de courbure (CC) de la trajectoire du moyeu de la roue arrière est choisi de façon à minimiser la distance entre la projection dans un plan vertical, selon une direction transversale à la bicyclette, de ce centre de courbure et de l'ensemble des lignes de chaîne.

La suspension selon l'invention est simple à industrialiser dans la mesure où elle ne met en oeuvre qu'un agencement déformable à quatre pivots, cette conformation en quadrilatère permettant en outre d'assurer une rigidité transversale suffisante à la bicyclette.

La géométrie de la suspension arrière proposée permet d'obtenir, lors du pédalage, une résultante verticale des efforts exercés sur la roue arrière dirigée vers le bas, autrement dit la suspension arrière tendra à se relever légèrement lors du pédalage.

La géométrie proposée, associée à un réglage en butée haute de l'ensemble d'absorption des chocs, permet une utilisation optimale de l'énergie mécanique fournie par le cycliste lors du pédalage, la quasi-totalité de la puissance délivrée lors du pédalage étant utilisée pour le déplacement de la bicyclette vers l'avant. Le rendement du pédalage s'en trouve donc sensiblement accru.

Une bicyclette équipée d'une telle suspension peut utiliser un cadre et des roues très rigides, car ces éléments n'ont alors plus aucun rôle de confort à jouer, et ce, sans pénaliser le confort du cycliste.

## Revendications

1. Suspension arrière pour bicyclette, du type comprenant une fourche inférieure (4) montée à pivotement au niveau de la boîte de pédalier d'un cadre de bicyclette, et par son autre extrémité à une fourche supérieure (5), qui porte une roue (3) entraînée en rotation par une chaîne (12), et dont l'extrémité supérieure est montée à pivotement à l'extrémité d'un bras (6) dont l'autre extrémité est montée à pivotement sur le cadre (1), **caractérisé en ce que** les sommets (41,54,56,67) du quadrilatère articulé délimité par les fourches inférieure (4) et supérieure (5), le bras (6) et le cadre (1) sont agencés de sorte que la droite passant par l'axe de rotation du moyeu de la roue arrière, d'une part, et le centre de courbure (CC) de la trajectoire dudit moyeu lors du débattement de la suspension, d'autre part, forme avec une droite horizontale s'étendant parallèlement au plan longitudinal médian de la bicyclette, un angle compris entre 10° et 20°.

2. Suspension arrière pour bicyclette selon la revendication 1, **caractérisée en ce que** la droite passant par l'axe de rotation du moyeu de la roue arrière, d'une part, et le centre de courbure (CC) de la trajectoire dudit moyeu lors du débattement de la suspension, d'autre part, forme avec une droite horizontale s'étendant parallèlement au plan longitudinal médian de la bicyclette, un angle sensiblement égal à 14°.

3. Suspension arrière pour bicyclette selon les revendications 1 ou 2, **caractérisée en ce que** le centre de courbure (CC) de la trajectoire du moyeu de la roue arrière est situé à proximité du plan horizontal contenant la partie supérieure de la chaîne d'entraînement de la roue.

4. Suspension arrière pour bicyclette selon la revendication 3, **caractérisée en ce que** le bras (6) est d'un seul tenant avec un levier (7) de commande d'un ensemble d'absorption de chocs.

5. Suspension arrière pour bicyclette selon la revendication 4, **caractérisée en ce que** le bras (6) et le levier (7) s'étendent dans des directions faisant entre elles un angle obtus.

6. Suspension arrière pour bicyclette selon les revendications 4 ou 5, **caractérisée en ce qu'**un ensemble d'absorption de chocs vient s'interposer entre le tube de selle (1b) et l'extrémité du levier (7) opposée au point de pivotement (67).

7. Suspension arrière pour bicyclette selon l'une quelconque des revendications précédentes, **caractérisée en ce que** le point de pivotement (41) de la fourche inférieure (4) sur le cadre (1) est situé au-dessus de l'axe (10a) de la boîte de pédalier.

8. Suspension arrière pour bicyclette selon l'une quelconque des revendications précédentes, **caractérisée en ce que** le point de pivotement (41) de la fourche inférieure sur le cadre est situé en avant de l'axe de la boîte de pédalier.

9. Suspension arrière pour bicyclette selon les revendications 7 ou 8, **caractérisée en ce que** le point (41) de pivotement de la fourche inférieure (4) sur le cadre (1) est disposé au-dessus d'une droite horizontale passant par les axes de rotation des roues avant (2b) et arrière (3).

10. Suspension arrière pour bicyclette selon l'une quelconque des revendications précédentes, **caractérisée en ce que** le point (54) de liaison de la fourche inférieure (4) et de la fourche supérieure (5) est situé au-dessus d'une droite horizontale passant par l'axe (10a) de la boîte de pédalier.

11. Suspension arrière pour bicyclette selon l'une quelconque des revendications précédentes, **caractérisée en ce que** le point (56) de liaison de la fourche supérieure et du bras (6) est disposé en avant du point (54) et au-dessus de ce dernier.

12. Suspension arrière pour bicyclette selon l'une quelconque des revendications précédentes, **caractérisée en ce que** le point de pivotement (67), commun au levier (7) et au bras (6), sur le cadre est situé en arrière du point (41).

## Claims

1. Rear suspension for a bicycle, of the type comprising a lower fork (4) mounted in a pivoting manner at the level of the bottom bracket shell of a bicycle frame, and by its other extremity to an upper fork (5), which carries a wheel (3) driven in a rotational manner by a chain (12), and the upper extremity of which is mounted in a pivoting manner at the extremity of an arm (6), the other extremity of which is mounted in a pivoting manner on the frame (1), **characterised in that** the peaks (41, 54, 56, 67) of the articulated rectangle delimited by the lower (4) and upper (5) forks, the arm (6) and the frame (1) are arranged such that the straight line passing through the axis of rotation of the hub of the rear wheel on the one hand, and the centre of curvature (CC) of the trajectory of said hub during displacement of the suspension on the other hand, forms an angle of between 10° and 20° with a horizontal straight line extending parallel to the longitudinal median plane of the bicycle.

2. Rear suspension for a bicycle according to claim 1, **characterised in that** the straight line passing through the axis of rotation of the hub of the rear wheel, on the one hand, and the centre of curvature (CC) of the trajectory of said hub during displacement of the suspension on the other hand, forms an angle substantially equal to 14° with a horizontal straight line extending parallel to the longitudinal median plane of the bicycle.

3. Rear suspension for a bicycle according to claims 1 or 2, **characterised in that** the centre of curvature (CC) of the trajectory of the hub of the rear wheel is situated in the proximity of the horizontal plane containing the upper part of the drive chain for the wheel.

4. Rear suspension for a bicycle according to claim 3, **characterised in that** the arm (6) is in one piece with a control lever (7) for a shock absorber assembly.

5. Rear suspension for a bicycle according to claim 4, **characterised in that** the arm (6) and the lever (7) extend in directions that form between them an obtuse angle.

6. Rear suspension for a bicycle according to claims 4 or 5, **characterised in that** a shock absorber assembly is interposed between the saddle tube (1b) and the extremity of the lever (7) opposite the pivot point (67).

7. Rear suspension for a bicycle according to any one of the preceding claims, **characterised in that** the pivot point (41) of the lower fork (4) on the frame (1) is situated above the axis (10a) of the bottom bracket shell.

8. Rear suspension for a bicycle according to any one of the preceding claims, **characterised in that** the pivot point (41) of the lower fork (4) on the frame is situated forward of the axis of the bottom bracket shell.

9. Rear suspension for a bicycle according to claims 7 or 8, **characterised in that** the pivot point (41) of the lower fork (4) on the frame (1) is located above a horizontal straight line passing through the axes of rotation of the front (2b) and rear (3) wheels.

10. Rear suspension for a bicycle according to any one of the preceding claims, **characterised in that** the junction point (54) of the lower fork (4) and the upper fork (5) is situated above a horizontal straight line passing through the axis (10a) of the bottom bracket shell.

11. Rear suspension for a bicycle according to any one of the preceding claims, **characterised in that** the junction point (56) of the upper fork and the arm (6) is located forward of the point (54) and above it.

12. Rear suspension for a bicycle according to any one of the preceding claims, **characterised in that** the pivot point (67) common to the lever (7) and the arm (6) on the frame is situated behind the point (41).

## Patentansprüche

1. Hintere Aufhängung für ein Fahrrad, umfassend eine untere Gabel (4), die schwenkbar im Bereich des Tretkurbelgehäuses eines Fahrradrahmens und mit ihrem anderen Ende an einer oberen Gabel (5) montiert ist, die ein Rad (3) trägt, das durch eine Kette (12) in Rotation versetzt wird, und deren oberes Ende schwenkbar am Ende eines Arms (6) montiert ist, dessen anderes Ende schwenkbar am Rahmen (1) montiert ist, **dadurch gekennzeichnet, dass** die Spitzen (41, 54, 56, 67) des Gelenkvierecks, das durch die untere (4) und obere Gabel (5), den Arm (6) und den Rahmen (1) definiert wird, so angeordnet sind, dass die Gerade, die durch die Drehachse der Nabe des Hinterrads einerseits und den Krümmungsmittelpunkt (CC) des Wegs der Nabe bei der Durchfederung der Aufhängung andererseits geht, mit einer horizontalen Geraden, die sich parallel zur Mittelebene in Längsrichtung des Fahrrads erstreckt, einen Winkel zwischen 10° und 20° bildet.

2. Hintere Aufhängung für ein Fahrrad nach Anspruch 1, **dadurch gekennzeichnet, dass** die Gerade, die durch die Drehachse der Nabe des Hinterrads einerseits und den Krümmungsmittelpunkt (CC) des Wegs der Nabe bei der Durchfederung der Aufhängung andererseits geht, mit einer horizontalen Geraden, die sich parallel zur Mittelebene in Längsrichtung des Fahrrads erstreckt, einen Winkel von im Wesentlichen gleich 14° bildet.

3. Hintere Aufhängung für ein Fahrrad nach den Ansprüchen 1 oder 2, **dadurch gekennzeichnet, dass** der Krümmungsmittelpunkt (CC) des Wegs der Nabe des Hinterrads in der Nähe der horizontalen Ebene angeordnet ist, die den oberen Teil der Kette zum Antrieb des Rades enthält.

4. Hintere Aufhängung für ein Fahrrad nach Anspruch 3, **dadurch gekennzeichnet, dass** der Arm (6) aus einem Stück mit einem Hebel (7) zur Steuerung einer Einheit zur Aufnahme von Stößen gebildet ist.

5. Hintere Aufhängung für ein Fahrrad nach Anspruch 4, **dadurch gekennzeichnet, dass** sich der Arm (6) und der Hebel (7) in Richtungen erstrecken, die zwischen sich einen stumpfen Winkel bilden.

6. Hintere Aufhängung für ein Fahrrad nach den Ansprüchen 4 oder 5, **dadurch gekennzeichnet, dass** zwischen dem Sattelrohr (1b) und dem Ende des Hebels (7), das dem Schwenkpunkt (67) entgegengesetzt ist, eine Einheit zur Aufnahme von Stößen angeordnet ist.

7. Hintere Aufhängung für ein Fahrrad nach einem der vorhergehenden Ansprüche, **dadurch gekennzeichnet, dass** der Schwenkpunkt (41) der unteren Gabel (4) am Rahmen (1) oberhalb der Achse (10a) des Tretkurbelgehäuses angeordnet ist.

8. Hintere Aufhängung für ein Fahrrad nach einem der vorhergehenden Ansprüche, **dadurch gekennzeichnet, dass** der Schwenkpunkt (41) der unteren Gabel am Rahmen vor der Achse des Tretkurbelgehäuses angeordnet ist.

9. Hintere Aufhängung für ein Fahrrad nach den Ansprüchen 7 oder 8, **dadurch gekennzeichnet, dass** der Schwenkpunkt (41) der unteren Gabel (4) am Rahmen (1) oberhalb einer horizontalen Geraden angeordnet ist, die durch die Drehachsen des Vorderrads (2b) und des Hinterrads (3) geht.

10. Hintere Aufhängung für ein Fahrrad nach einem der vorhergehenden Ansprüche, **dadurch gekennzeichnet, dass** der Verbindungspunkt (54) der unteren Gabel (4) und der oberen Gabel (5) oberhalb einer horizontalen Geraden angeordnet ist, die durch die Achse (10a) des Tretkurbelgehäuses geht.

11. Hintere Aufhängung für ein Fahrrad nach einem der vorhergehenden Ansprüche, **dadurch gekennzeichnet, dass** der Verbindungspunkt (56) der oberen Gabel und des Arms (6) vor dem Punkt (54) und oberhalb des letztgenannten angeordnet ist.

12. Hintere Aufhängung für ein Fahrrad nach einem der vorhergehenden Ansprüche, **dadurch gekennzeichnet, dass** der gemeinsame Schwenkpunkt (67) des Hebels (7) und des Arms (6) am Rahmen hinter dem Punkt (41) angeordnet ist.
